# EUROPÄISCHE PATENTANMELDUNG

(11) **EP 3 349 493 A1**
(43) Veröffentlichungstag der Anmeldung: **18.07.2018**
(21) Anmeldenummer: 17001788.3
(22) Anmeldetag: 25.10.2017
(51) Int. Cl.: H04W 8/28, H04W 76/10

(54) **SIGNALISIERUNG IM MOBILEFUNK BEI RUFNUMMERN MITNAHME**

(30) Priorität: 25.10.2016 EP 16002304
(71) Anmelder: Jehnke, Baldur Erich, 13403 Berlin (DE)
(72) Erfinder: Jehnke, Baldur Erich, 13403 Berlin (DE)

(57) **Zusammenfassung**

Heutzutage darf der Mobilfunkteilnehmer bei einem Wechsel zu einem anderen Mobilfunkbetreiber seine bisherige Telefonrufnummer mitnehmen; aber diese enthält nur die veraltete , und nicht die neugültige NDC des neuen Mobilfunkbetreibers. Die daraus folgende Notwendigkeit der Befragung einer MobileNumberPortability-Datenbank bedeutet einen großen Mehraufwand bei Signalisierung, Routing und Billing.

Wir lösen das Problem dadurch, daß wir die Befragung der Datenbank von der Mobilkommunikation abtrennen, d.h. die Befragung der Datenbank vor der Aufnahme der Mobilkommunikation vornehmen und dann mit diesen Aukunftsdaten (bevorzugt: IMSI) in die Mobilkommunikation eintreten.

## Beschreibung

Ein zentraler Bestandteil eines Mobilfunkgeräts ist die SIM-Karte,die die International Mobile Subscriber Identity (IMSI) enthält, aus der die Mobilfunkgesellschaft den Teilnehmer identifizieren kann. Die eigentliche Telefon (Ruf)-Nummer enthält den National Destination Code (NDC), der ebenso wie der Mobile Network Code (MNC) bei der IMSI, sagt aus welchem Netzwerk der Teilnehmer stammt.Seit Einführung der Mobile Number Portability im Mobilfunk, bei der der Teilnehmer seine Rufnummer bei einem Wechsel zu einem anderen Netzbetreiber mitnehmen kann, kann aber über die NDC nicht mehr ermittelt werden, zu welchem Netzwerk der Teilnehmer gehört. Der große Vorteil für den Kunden verursacht einen großen Mehraufwand bei Signalisierung, Routing und Billing, weil jetzt das Gespräch nicht mehr über den NDC zum richtigen Netzwerk weitergeleitet werden kann, sondern erst eine MobileNumberPortability-Datenbank abgefragt werden muß.

Wir lösen das Problem des Mehraufwands dadurch, daß wir die Befragung der Datenbank, die uns das Mobilnetzwerk des Gesprächspartners liefert, von der Mobilkommunikation abtrennen und die Datenbankbefragung vorher durchführen, d.h. bevor der Teilnehmer den Anrufswunsch übermittelt. Er tippt jetzt die Rufnummer ins Handy ein (oder ruft sie aus dem Handyspeicher ab) und dann fragt das Handy in der Datenbank an, aber nicht nur nach dem MNC, sondern nach der gesamten IMSI (eine Rufnummerndatenbank,die nicht nur den MNC, sondern die gesamte IMSI gespeichert hat, bedeutet einen nur sehr geringen Mehraufwand) und diese IMSI übermittelt das Handy der Mobilfunkgesellschaft (statt der Rufnummer). Diese Vorabbefragung der Datenbank bedeutet für die Mobilfunkgesellschaft keine Belastung und eigentlich auch nicht für den Kunden; denn die ca. 0,5 sec, die das maximal kosten kann, sind für den Menschen ohne Bedeutung. Der Mobilfunkgesellschaft braucht dann nur die IMSI des Gesprächspartners mitgeteilt zu werden; die Rufnummer braucht sie nicht mehr zu wissen, für sie ist der Teilnehmer durch die IMSI vollständig identifiziert : die Mobilgesellschaften arbeiten nur noch mit der IMSI. Und damit entfallen alle obigen Probleme. Statt des Teilnehmers kann auch die Mobilfunkgesellschaft diese Vorab-Datenbankanfrage tätigen.

## Patentansprüche

1. Verfahren zur Beseitigung des Mehraufwands bei der Signalisierung im Mobilfunk, der durch die Rufnummernmitnahme entsteht,
**dadurch gekennzeichnet,**
**daß** wir die Befragung der Rufnummerndatenbank von der Mobilkommunikation abtrennen, die Datenbank nach der IMSI des Gesprächspartners befragen und den weiteren Verlauf mit der IMSI tätigen.
